# EUROPEAN PATENT APPLICATION

(11) **EP 4 708 088 A1**
(43) Date of publication of application: **11.03.2026**
(21) Application number: 25200201.9
(22) Date of filing: 04.09.2025
(51) Int. Cl.: G06F 21/31, G06F 21/32, G06F 21/40, H04W 12/06

(54) **ELECTRONIC INFORMATION RECOGNITION SYSTEM AND METHOD THEREOF**

(30) Priority: 06.09.2024 TW 113133970
(71) Applicant: Jian, Yu-Chuan, Taipei City 110036 (TW)
(72) Inventor: Jian, Yu-Chuan, 110036 Taipei City (TW); Chien, Yu-Chang, 110036 Taipei City (TW)
(74) Representative: Reich, Jochen

(57) **Abstract**

To address the issue of electronic information trustworthiness, this invention provides an electronic information recognition system and its method. The system includes at least one electronic device connected to the platform's server host to capture physical characteristics. When a customer attempts to log into the platform, the device retrieves at least one type of first physical characteristic from the user. updated automatically or passively. After logging into the platform, the system can selectively capture a second physical characteristic from the user at regular intervals to maintain the login session. The first characteristic may be the same as or different from the second characteristic. The platform includes at least one module connected to each other to interactively process customer information on the network.

## Description

### BACKGROUND OF THE INVENTION

### 1. Field of the Invention

The present invention relates to an electronic information recognition system and method , and in particular, can approve the credibility of electronic information by providing customers with actual names for recognition.

### 2. The Prior Arts

With the rapid development of the Internet and digital technology, the security and credibility of electronic information have become the focus of global attention. Modern society relies on various digital platforms for identity recognition, transactions, communication and other activities, which contain a large amount of personal information and sensitive data. With the increase in cybercrime and data leakage incidents, how to effectively protect this data and ensure the authenticity and credibility of information has become an urgent problem that needs to be solved. Therefore, the industry is in urgent need of an electronic information authentication system with high security and multi-level authentication mechanism to meet the growing demand for information security.

In the current digital age, the transmission and use of information has become an important cornerstone of social operations. However, with the rapid development of network technology, the credibility of information is increasingly challenged. False information, cyber traps, data tampering, deep fakes and other problems are common, which not only endangers personal privacy, property security and image, but also poses a serious threat to the operations of enterprises and government agencies. Therefore, how to effectively recognize the credibility of digital information has become one of the core issues in current technological development.

Traditional authentication methods are no longer able to cope with this new type of security challenge, which requires the use of more comprehensive technologies to authenticate the credibility of various digital assets and electronic information of customers.

### SUMMARY OF THE INVENTION

In order to solve the above problems, the purpose of the present invention is to provide an electronic information recognition system and method thereof, which combines a variety of advanced technologies, such as measurement technology of body characteristics, variable key code mechanism, big data analysis, artificial intelligence (AI) calculation, etc., to enhance the security of identity recognition and the efficiency of information processing. The system can not only perform strict identity verification when customers log into the platform, but also regularly re-verify their identities after logging in based on actual needs to ensure the continued validity of customer identities.

In addition, the present invention also takes into account the confidentiality and traceability of data, and designs multiple modules in the system, such as a disclosure module, an identification module, a telecommunications verification module, etc. These modules can effectively verify, protect and manage customer data. In particular, the telecommunications verification module can support the interconnection between traditional telephone lines and the Internet, and provide more flexible call recording and video recording options, further enhancing information security and customer privacy protection during the communication process. Another object of the present invention is to provide a highly secure electronic information authentication method with a multi-level authentication mechanism to address the challenges faced by information security and information credibility in today's digital society. Specifically, the present invention aims to ensure the authenticity, integrity and security of personal information on a network platform and prevent unauthorized access and data leakage.

The present invention provides an electronic information recognition system, including: at least one electronic device bound and connected to each other, connected to a platform of a server host, wherein any of the electronic devices uses characteristics from the body to capture at least one first characteristic from the body when a customer wants to log in to the platform, and is combined with a variable key code written back through the network in conjunction with the approved server or a third party to recognize the customer's identity, thereby determining whether the customer can log in to the platform, and the variable key code can be automatically updated or passively updated; after logging in to the platform, a second characteristic from the body is selectively captured again at regular intervals to maintain the login, and the first characteristic is the same as or different from the second characteristic, wherein the platform includes at least one module connected to each other to interactively process the information of customers on the network: a recording module, which can record and provide the information and/or digital track of any customer after completing the login; and a verification module, which is connected to at least one government agency, identification organization and/or third party to interactively verify the information and/or digital track of the customer and give the customer whose verification result is passed an recognition code and/or notarization.

In one embodiment of the present invention, the at least one module further includes: a disclosure module, which obtains the information of any customer through a smart contract signed between customers; an authorization module, for customers to confirm whether the information has been authorized for use by the relevant customers; an identification module, which collects big data comparison and calculates and analyzes the credibility and/or authenticity of the information and/or the digital track. The identification module can analyze the URL, website or image based on the input URL, website or image through the network search engine and the network server database of the platform, and deconstruct multiple key indicator data and/or comments of the information. If the verification result is not passed, the verification module notifies the at least one government agency, identification organization, third party and/or the customer.

In one embodiment of the present invention, the at least one module further includes: a tracking push module, where the customer can push the information to his/her tracker; a telecommunications verification module, which can support the interconnection between traditional telephone lines and the network, and can present the recognition code when the caller ID is displayed, providing the customer with the option of answering all calls, answering calls only with the recognition code, or answering calls only with the recognition code and consent to call recording.

In one embodiment of the present invention, the telecommunication verification module can provide the caller with a setting in advance to not agree to video or audio recording, and the record file will be automatically deleted after the call. During the call, the caller can touch a specific key of the electronic device to record the video or audio and store the record file, but the record file will be restricted from being read and analyzed, reminded, sorted and text output by the recognition module, unless the other party agrees or the restriction is lifted according to law during a judicial investigation; the telecommunication verification module can also provide the caller with a setting in advance to agree to video or audio recording, and the record file will be automatically stored after the call. The record file can be read and analyzed, reminded, sorted and text output by the recognition module.

In one embodiment of the present invention, the record file can be stored in a cloud server or at least one of the electronic devices; when communicating via SMS, the telecommunications verification module can combine the verification module and the identification module to recognize the SMS and display the customer's phone number or code or name; the digital track includes various information recognition, inquiries, exchanges, prosecutions and reports, contract signings, transaction behaviors, personal information disclosure and telecommunications behavior settings, audio or video recording and storage, and file copying, modification and movement. The information includes: comments, portraits, endorsements, brand ownership, and other people, things, time, place, and objects related to the customer.

In one embodiment of the present invention, the telecommunications verification module can display whether the recognition code is present, whether the recording or video recording is agreed upon, and if the recording or video recording is agreed upon, there is an option to temporarily cancel the recording or video recording, and if the recording or video recording is not agreed upon, there is an option to temporarily start the recording or video recording; and provide traditional telephones or smart phones with automatic settings to only answer calls from the set phone number and calls with the recognition code and the consent of the other party to record the call.

One embodiment of the present invention discloses a method for electronic information recognition, including: selecting features from the body; capturing at least one first feature from the body when the customer logs in, and selectively capturing a second feature from the body at regular intervals after the login, wherein the first feature is the same as or different from the second feature; and combining a variable key code writeback to recognize the customer's identity, thereby determining whether the customer can log in to the platform, and the variable key code can be automatically updated or passively updated; wherein the platform includes at least one module connected to each other to interactively process the information of customers on the network: after completing the login, record and provide the information and/or digital track of any customer; connect to at least one government agency, identification organization and/or third party to interactively verify the information and/or digital track of the customer and give the customer whose verification result is passed an recognition code and/or notarization.

In one embodiment of the present invention, the at least one module further performs operations including: obtaining the information of any customer through a smart contract; allowing the customer to confirm whether the information is authorized by the relevant customer; the customer can push the information to his/her tracker; supporting the interconnection between traditional telephone lines and the network, and presenting the recognition code when the caller ID is displayed, providing the customer with the option to answer all calls, answer calls only with the recognition code, or answer calls only with the recognition code and consent to call recording; collecting big data for comparison and calculation to analyze the credibility and/or authenticity of the information and/or the digital track; according to the input URL, website or picture, Through the collaboration of the Internet search engine and the platform's network server database, the URL, website or image is analyzed to deconstruct multiple key indicator data and/or comments of the information. The digital trajectory includes the information recognition, inquiry, communication, prosecution and reporting, contract signing, transaction behavior, personal information disclosure and telecommunication behavior settings, audio or video recording and storage, and file copying, change and movement. The information includes: comments, portraits, endorsements, brands, etc., and people, things, time, place, and objects related to the customer; if the verification result is not passed, the at least one government agency, identification organization and/or third party and the customer will be notified.

In one embodiment of the present invention, the at least one module further performs operations including: providing the caller with a pre-set setting to disagree with video or audio recording, in which case the record file will be automatically deleted after the call; during a call, a specific key of the electronic device is touched to record video or audio and store the record file, but the record file will be restricted from being read and analyzed, reminded, organized, and output as text, unless the other party agrees or the restriction is lifted in accordance with the law during a judicial investigation; the caller may also be provided with a pre-set setting to agree to video or audio recording, in which case the record file will be automatically stored after the call, and the record file can be read and analyzed, reminded, organized, and output as text.

In one embodiment of the present invention, the at least one module further executes operations including: storing the record file in a cloud server or at least one of the electronic devices; when communicating via text messages, the text message can be recognized and the customer's phone number, code or name can be displayed; traditional phones or smart phones can be automatically set to only answer calls from set phone numbers and calls with the recognition code and the other party agrees to record the call; when a call comes in, it can display whether there is the recognition code, whether recording or video recording is agreed, and if recording or video recording is agreed, there is an option to temporarily cancel recording or video recording, and if recording or video recording is not agreed, there is an option to temporarily start recording or video recording.

The electronic information authentication system and method of the present invention selects to capture features from the body and combines them with a variable key code to achieve high-security customer identity authentication. The system is able to re-authenticate customers periodically as needed after they log in, ensuring ongoing security. Through multiple modules within the platform (such as recording module, verification module, disclosure module, etc.), the system can manage and verify customer information, support information interaction with third parties and government agencies, and provide smart contract management, telephone verification, recording and video options and other diverse functions, thereby improving the accuracy and trust of information processing.

### BRIEF DESCRIPTION OF THE DRAWINGS

FIG1 is a schematic diagram of an electronic information recognition system of the present invention;
FIG2 is a schematic diagram of an electronic information recognition system according to an embodiment of the present invention;
FIG3 is a schematic diagram of an electronic information recognition system according to an embodiment of the present invention;

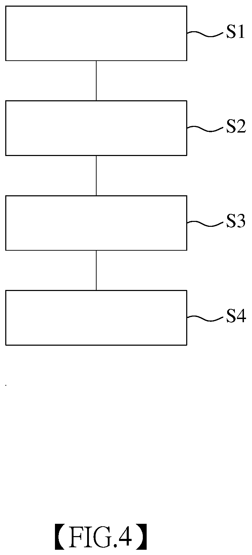

FIG. 4 is a schematic diagram of an electronic information recognition method according to an embodiment of the present invention.

### DETAILED DESCRIPTION OF THE PREFERRED EMBODIMENT

The same reference numbers in different drawings represent the same or similar elements and therefore perform similar functions. Additionally, descriptions and details of well-known steps and elements are omitted to simplify the description. Furthermore, in the following detailed description of the present invention, numerous specific details are set forth in order to provide a thorough understanding of the present invention. However, it is understood that the present invention may be practiced without these specific details. In other instances, well-known methods, procedures, and components have not been described in detail to avoid unnecessarily obscuring aspects of the present invention. Examples of various embodiments are further illustrated and described below. It should be understood that the description herein is not intended to limit the claimed items to the particular embodiments described. On the contrary, it is intended to cover alternatives, modifications and equivalents, which may be included within the spirit and scope of the invention as defined by the appended claims.

The terms used in the present invention are only used to describe specific embodiments and are not intended to limit the content of the present invention. As used herein, the singular forms "a", "an" and "the" may also include the plural forms unless the context clearly indicates otherwise. It will be further understood that "include" and "comprising" when used in this specification specify the presence of stated features, integers, operations, elements and/or components, but do not exclude the presence or addition of one or more other features, integers, operations, elements, components and/or parts thereof.

As mentioned above, conventional electronic information authentication systems usually rely on a single identity authentication method such as a static password or a text message authentication code. However, these methods are insufficient in the face of advanced cyber attack techniques because they can be easily cracked or bypassed, which makes it impossible to effectively guarantee the security and credibility of messages. In order to improve the security of the system, it is usually necessary to rely on a multi-level recognition mechanism.

In particular, when traditional identity authentication systems are dealing with applications that require high security, such as financial transactions or the protection of important personal data, they often require additional authentication methods to supplement the deficiencies of the main system. This will not only increase the complexity of system design, but also increase the difficulty of operation. For example, many systems still rely on simple static passwords and one-time authorization codes, which require additional manual intervention or secondary authorization, making them more difficult to manage and use.

In addition, although existing multi-factor authentication technologies can improve security, most of them rely on independent authentication methods and cannot effectively integrate different authentication methods to provide more comprehensive protection. Even if information recognition technology is introduced, its scope of application and accuracy are still limited, especially in high-frequency login or recognition processes, where it cannot be selectively automatically updated and variably adjusted. Such technology still needs to rely on additional manual intervention and tedious post-processing to ensure security.

The inventors have found that traditional electronic information authentication systems still have the following major problems when facing modern security needs: First, the limitation of a single authentication method. Traditional systems usually rely on static passwords or SMS authentication codes for identity authentication. These methods are easily cracked or bypassed and cannot effectively respond to complex network threats, which in turn leads to insufficient system security; Second, the complexity of the authentication process. When facing multi-level security needs, existing systems require additional authentication methods to supplement the deficiencies of the main system, which not only increases the complexity of system design and operation, but also increases the difficulty of management and use; Third, there is a lack of variable adjustment technology. Although existing multi-factor authentication technologies can improve security, most of them still cannot be automatically updated and variably adjusted, resulting in the need to rely on cumbersome manual intervention during high-frequency login or authentication processes, increasing the system maintenance cost.

The following will clearly and completely describe the implementation methods in the embodiments of the present invention in conjunction with the drawings in the embodiments of the present invention. Obviously, the described embodiments are only part of the embodiments of the present invention, rather than all the embodiments. Based on the embodiments of the present invention, all other embodiments obtained by persons having ordinary knowledge in the relevant technical field without making progressive creations shall fall within the scope of protection of the present invention.

In the following description, many specific details are set forth to facilitate a full understanding of the present invention, but the present invention may also be implemented in other ways different from those described herein, and persons with ordinary knowledge in the relevant technical field may make similar generalizations without violating the connotation of the present invention. Therefore, the present invention is not limited to the specific embodiments disclosed below.

Secondly, the present invention is described in detail in conjunction with schematic diagrams. When describing the embodiments of the present invention in detail, for the sake of convenience of explanation, the cross-sectional diagrams showing the structure of the device components will not be partially enlarged according to the general proportion, the relative sizes between the device components do not represent the actual sizes, and the schematic diagrams are only examples, which should not limit the scope of protection of the present invention. In addition, the actual production should include three-dimensional dimensions of length, width and height.

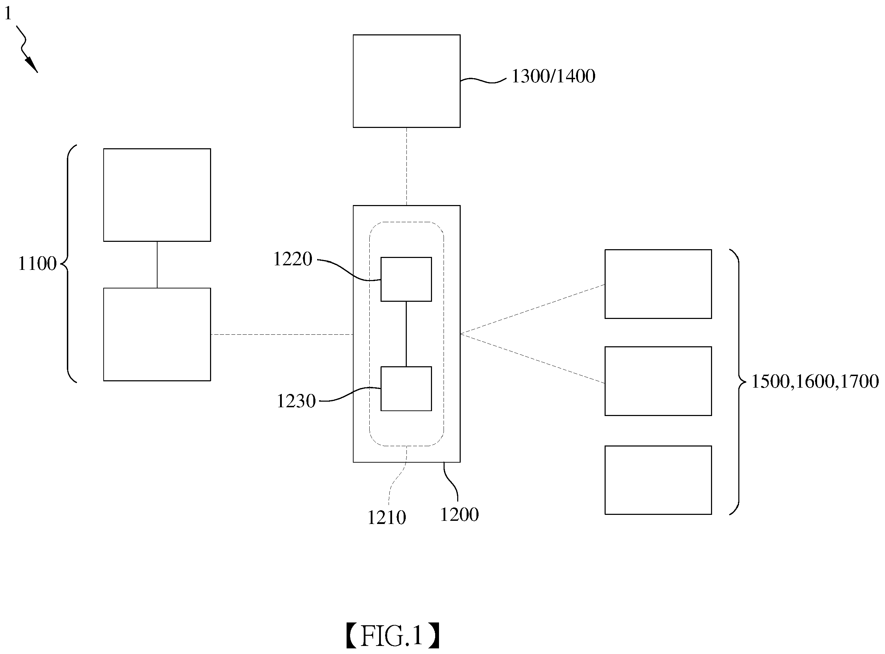

FIG1 is a schematic diagram of an electronic information recognition system of the present invention; As shown in FIG1 , an electronic information recognition system 1 comprises: at least one electronic device 1100 bound to each other and connected to a platform 1210 of a server host 1200, wherein any one of the electronic devices 1100 uses a feature from the body to capture at least one first feature from the body when a client wishes to log into the platform 1210, and writes back a variable key code through the network in conjunction with a recognition server 1300 or a third-party server 1400 to recognize the client's identity, thereby determining whether the client can log into the platform 1210, and the variable key code can be automatically updated or passively updated, and at least one electronic device 1100 bound to each other receives the variable key code generated from the recognition server 1300 or the third-party server 1400, and generates a recognition key code. The variable key code can replace the recognized key code periodically, for example, by passively changing it in units of seconds, hours, days, months or years. Alternatively, the variable key code can be actively obtained from the third-party server 1400 or the authentication server 1300 and changed when the customer performs electronic identity authentication. The electronic device can be, for example: a mobile communication device, various types of computers, smart watches, and self-service terminals.

In addition, the memory unit of at least one electronic device 1100 directly stores the features captured from the at least one electronic device 1100 for generating the recognition key code. The customer can flexibly set a recognition key code related to the feature for identity recognition. The feature can be, for example, taken from: fine lines on the hands, the thin membrane of the eyeball, blood vessels, voice and the position of the facial features; after logging into the platform 1210, a second feature from the body is selectively captured at regular intervals to maintain the login, and the first feature is the same as or different from the second feature. The platform 1210 includes at least one module connected to each other to interactively process the information of customers on the Internet: a recording module 1220, which can record and provide the information and/or digital track of any customer after completing the login; and a verification module 1230, which is connected to at least one government agency 1500, an identification organization 1600 and/or a third party 1700 to interactively verify the customer's information and/or the digital track and give the customer whose verification result is passed a recognition code and/or notarization.

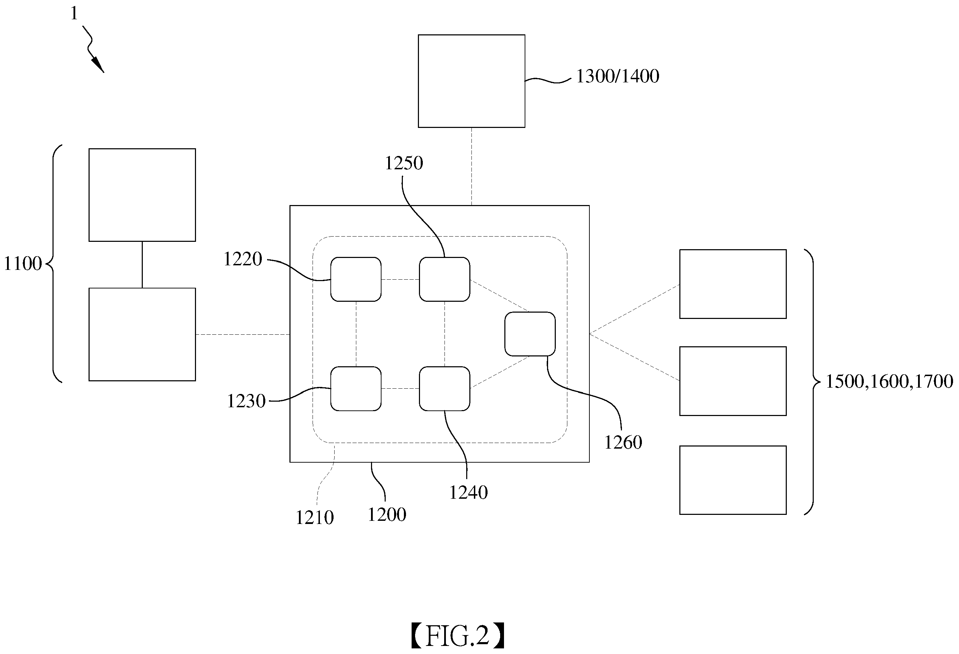

As shown in FIG. 2 , in one embodiment of the present invention, the at least one module further includes: a disclosure module 1240, which obtains the information of any customer through a smart contract signed between customers; an authorization module 1250, which allows customers to confirm whether the information has been authorized for use by the relevant customers; an identification module 1260, which collects big data for comparison and calculation and analysis to determine the credibility and/or authenticity of the information and/or the digital track. The identification module 1260 can analyze the URL, website or image based on the input URL, website or image through the network search engine and the network server database of the platform to deconstruct multiple key indicator data and/or comments of the information. The verification module 1230 notifies the at least one government agency, identification organization, third party and /or the customer if the verification result is not passed. The calculation and analysis can, for example, use the calculation processor (not shown) of the platform 1210 of the server host 1200 to compare and analyze the data; deconstruct the collected data to generate multiple key indicators. For example, for images or web pages, these indicators may include but are not limited to: timestamp, source IP address, publisher information, related word frequency, link relationship, pixel features of the image, etc. The indicators are weighted to form a comprehensive credibility score to judge the reliability of the message; collect comments, social media feedback, news reports and other public opinion information related to the message, analyze the emotional tendency of these feedbacks (such as positive, negative, neutral) through the calculation processor, combine the public opinion results with key indicator data, and further strengthen the judgment of the authenticity of the message; use the Internet search engine to perform reverse search (such as reverse image search, reverse URL search), and find the possible original source or related information of the message by matching similar content or sources. Combined with the database content of the platform server, confirm whether the information is related to existing reliable data, or whether there is a risk of false or fabricated information .

The coordinated operation of the disclosure module 1240, the authorization module 1250 and the identification module 1260 of the system can effectively protect the security and credibility of customer information. The disclosure module 1240 ensures that the acquisition of information is based on the agreement between customers through the implementation of smart contracts, thereby enhancing the transparency of the data sharing process; the authorization module 1250 further gives customers control over the use of their information, ensuring that relevant operations can only be performed after authorization, thereby improving the compliance of data use. The recognition module 1260 uses big data comparison and computational analysis to accurately analyze and evaluate the credibility and authenticity of the information and digital traces obtained from the Internet, thereby reducing the risk of misjudgment or false information. In addition, the module can also analyze and deconstruct URLs, websites, or images through collaboration with Internet search engines and server databases to provide multi-dimensional data support. Once the identification results do not meet the recognition standards, the verification module 1230 will immediately notify the relevant government agencies, identification organizations, third parties and customers to ensure the integrity of the system and the protection of customer interests, thereby realizing an efficient and secure electronic information recognition process.

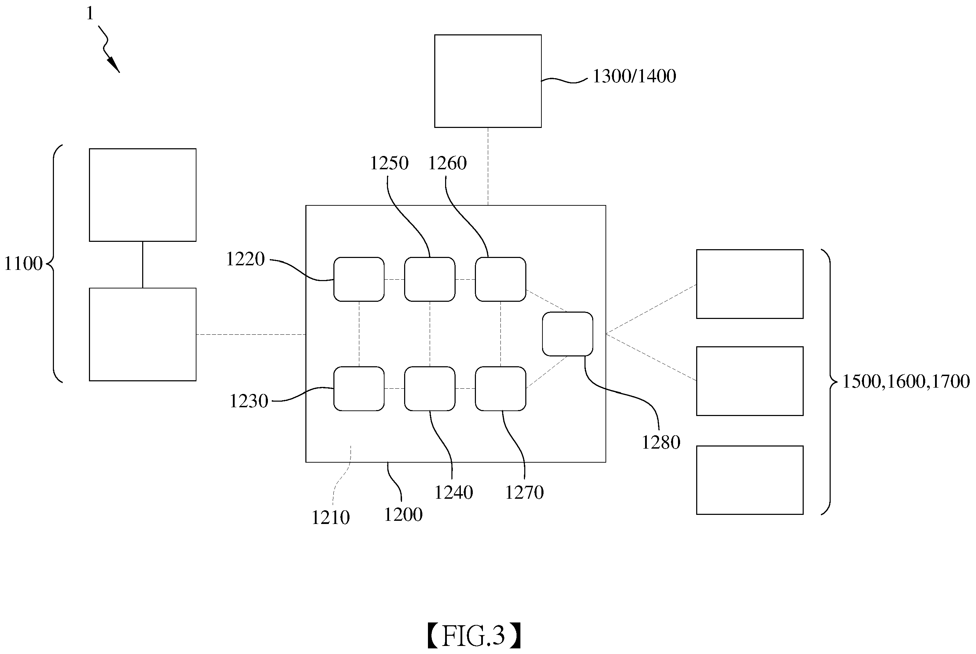

As shown in FIG. 3 , in one embodiment of the present invention, the at least one module further includes: a tracking push module 1270, where the client can push the information to its tracker; a telecommunications verification module 1280, which can support the interconnection between traditional telephone lines and the network, and can present the recognition code when the caller ID is displayed, providing the client with the option of answering all calls, answering calls only with the recognition code, or answering calls only with the recognition code and consent to call recording. The coordinated operation of the tracking and push module 1270 and the telecommunications verification module 1280 of the system significantly enhances the efficiency of transmitting customer information and the security of communications. The tracking push module 1270 allows clients to push important information to their followers in real time, thus achieving rapid dissemination and sharing of information and improving interactivity among clients and flexibility of information delivery. At the same time, the telecommunications verification module 1280, while supporting the interconnection between traditional telephone lines and the Internet, gives customers control over call screening through the caller ID recognition code. Customers can choose to answer all calls based on the recognition code displayed on the caller ID, or only answer calls with the recognition code, or even only answer calls from those who have agreed to call recording. This highly flexible communication management method not only improves customers' ability to control call security, but also helps prevent unnecessary harassment or potential fraud calls, thereby protecting customers' privacy and communication security.

In one embodiment of the present invention, the telecommunication verification module can provide the caller with a setting in advance to not agree to video or audio recording, and the record file will be automatically deleted after the call. During the call, the caller can touch a specific key of the electronic device to record the video or audio and store the record file, but the record file will be restricted from being read and analyzed, reminded, sorted and text output by the recognition module, unless the other party agrees or the restriction is lifted according to law during a judicial investigation; the telecommunication verification module can also provide the caller with a setting in advance to agree to video or audio recording, and the record file will be automatically stored after the call. The record file can be read and analyzed, reminded, sorted and text output by the recognition module. The telecommunications verification module 1280 has audio and video control and record management functions, which greatly improves privacy protection and record security during the communication process. Through the caller's pre-settings, customers can choose not to consent to video or audio recording. The system will automatically delete the record file after the call ends to ensure that unauthorized call content is not saved. If the customer chooses to agree to video or audio recording, the system will automatically store the call record and restrict its access. The restriction can only be lifted in accordance with the law with the other party's consent or judicial investigation. The record file can be further handed over to the identification module 1260 for analysis, reminder, organization and text output, providing a highly secure and compliant data processing method, which not only meets the customer's needs for call content records, but also effectively protects the communication privacy of both parties, and provides legal compliance support when necessary, realizing flexible management and efficient use of communication records.

In one embodiment of the present invention, the record file can be stored in a cloud server or at least one of the electronic devices; when communicating via SMS, the telecommunications verification module can combine the verification module and the identification module to recognize the SMS and display the customer's phone number or code or name; the digital track includes various information recognition, inquiries, exchanges, prosecutions and reports, contract signings, transaction behaviors, personal information disclosure and telecommunications behavior settings, audio or video recording and storage, and file copying, modification and movement. The information includes: comments, portraits, endorsements, brand ownership, and other people, things, time, place, and objects related to the customer. The Telecom Verification Module 1280 combines cloud storage and cross-module collaboration functions, significantly improving the security and flexibility of customer communications and data management. By storing recorded files on a cloud server or electronic device, the system ensures secure backup and convenient access to calls and data. The integration of SMS communication function enables the system to automatically verify and display the sender's phone number, code or name. The code can be a barcode, QR code or representative number, providing instant recognition of the source of the SMS, enhancing the transparency and credibility of the communication. In addition, the system can track and manage the digital trajectory of customers, including activities such as information recognition, inquiry, communication, prosecution and reporting, contract signing, transaction behavior, as well as personal information disclosure, audio and video recording, copying, changing and moving files, etc. By comprehensively recording and managing these data, the system not only protects customers' data privacy and security, but also provides key regulatory compliance and traceability capabilities to ensure customers' legitimate rights and interests in electronic communications and data processing.

In one embodiment of the present invention, the telecommunications verification module can display whether the recognition code is present, whether the recording or video recording is agreed upon, and if the recording or video recording is agreed upon, there is an option to temporarily cancel the recording or video recording, and if the recording or video recording is not agreed upon, there is an option to temporarily start the recording or video recording; and provide traditional telephones or smart phones with automatic settings to only answer calls from the set phone number and calls with the recognition code and the consent of the other party to record the call. The telecommunications verification module 1280 significantly improves the flexibility and privacy protection during the communication process through call management and audio and video recording control functions. When a call comes in, the module can instantly display whether the caller has the recognition code and whether they agree to recording or video recording, and provide customers with the option to temporarily cancel or start recording or video recording, thus achieving dynamic management and autonomous control during the call. In addition, the module supports automated settings for traditional phones and smartphones, allowing customers to only answer calls from set phone numbers and from those with a recognition code and consent to recording. This feature not only enhances customers' ability to screen incoming calls, avoiding potential security risks and privacy violations, but also provides higher compliance and legality protection for call records, ensuring the security and transparency of the communication environment.

One embodiment of the present invention discloses a method for electronic information recognition, including: selecting features from the body; capturing at least one first feature from the body when the customer logs in, and selectively capturing a second feature from the body at regular intervals after the login, wherein the first feature is the same as or different from the second feature; and combining a variable key code writeback to recognize the customer's identity, thereby determining whether the customer can log in to the platform, and the variable key code can be automatically updated or passively updated; wherein the platform includes at least one module connected to each other to interactively process the information of customers on the network: after completing the login, record and provide the information and/or digital track of any customer; connect to at least one government agency, identification organization and/or third party to interactively verify the information and/or digital track of the customer and give the customer whose verification result is passed an recognition code and/or notarization. This electronic information recognition method significantly improves the security and credibility of platform login and subsequent operations through a multi-level security recognition and information management process. The S1 step uses the measurement technology of body features to ensure high accuracy of customer identity recognition, and in the S2 step, security protection during login is further enhanced by capturing different or the same features multiple times. The introduction of a dynamic update mechanism for variable key codes not only increases the security level of customer identity recognition, but also ensures the tamper-proof and reliability of the recognition key codes. The S4 step processes the customer's information and digital traces through the interactive modules on the platform, and connects with government agencies, identification organizations and third parties for interactive verification, ensuring the authenticity and integrity of the information. Ultimately, by granting recognition codes and/or notarization to qualified customers, this method achieves an efficient and compliant identity recognition process, providing a solid guarantee for the safe operation of the platform.

In one embodiment of the present invention, the at least one module further performs operations including: obtaining the information of any customer through a smart contract; allowing the customer to confirm whether the information is authorized by the relevant customer; the customer can push the information to his/her tracker; supporting the interconnection between traditional telephone lines and the network, and presenting the recognition code when the caller ID is displayed, providing the customer with the option to answer all calls, answer calls only with the recognition code, or answer calls only with the recognition code and consent to call recording; collecting big data for comparison and calculation to analyze the credibility and/or authenticity of the information and/or the digital track; according to the input URL, website or picture, Through the collaboration of the Internet search engine and the platform's network server database, the URL, website or image is analyzed to deconstruct multiple key indicator data and/or comments of the information. The digital trajectory includes the information recognition, inquiry, communication, prosecution and reporting, contract signing, transaction behavior, personal information disclosure and telecommunication behavior settings, audio or video recording and storage, and file copying, change and movement. The information includes: comments, portraits, endorsements, brands, etc., and people, things, time, place, and objects related to the customer; if the verification result is not passed, the at least one government agency, identification organization and/or third party and the customer will be notified.

Secondly, the system allows customers to approve the authorized use of information and push authorized information to followers. This feature enhances customers' control over personal information. In addition, the module uses big data analysis and AI computing technology to accurately judge the credibility and authenticity of information, and conducts in-depth analysis of the multi-dimensional data of URLs, websites or images, providing highly reliable analysis results. Ultimately, the module ensures the authenticity and security of various digital traces, and promptly notifies relevant institutions and customers when verification fails, thereby achieving comprehensive information management and risk prevention.

In one embodiment of the present invention, the at least one module further performs operations including: providing the caller with a pre-set setting to disagree with video or audio recording, in which case the record file will be automatically deleted after the call; during a call, a specific key of the electronic device is touched to record video or audio and store the record file, but the record file will be restricted from being read and analyzed, reminded, organized, and output as text, unless the other party agrees or the restriction is lifted in accordance with the law during a judicial investigation; the caller may also be provided with a pre-set setting to agree to video or audio recording, in which case the record file will be automatically stored after the call, and the record file can be read and analyzed, reminded, organized, and output as text. When the caller sets in advance that he/she does not agree to audio or video recording, the system will automatically delete the relevant record files after the call ends to ensure that the call content will not be saved or used without authorization. In addition, during a call, if the caller chooses to use a specific function key to record audio or video, the system will save the record file, but there will be strict restrictions on the reading and processing of the file. The restrictions can only be lifted for analysis, reminders, organization and text output with the consent of the other party or within the legal framework of a judicial investigation. In contrast, if the caller agrees to audio or video recording in advance, the system will automatically store the record file after the call and allow complete data reading and analysis. This setting not only ensures the legality and security of call data, but also meets the high requirements for privacy protection during the communication process, and realizes the controllability and transparency of call records.

The at least one module further executes the operation including: storing the record file in a cloud server or at least one of the electronic devices; when communicating via SMS, the SMS can be recognized and the customer's phone number or code or name can be displayed, and the code can be a barcode, a QR code or a representative number; a traditional phone or smart phone is automatically set to only answer calls from the set phone number and those with the recognition code and the other party agrees to record the call; when a call comes in, it can display whether there is the recognition code, whether the recording or video recording is agreed, and if the recording or video recording is agreed, there is a temporary cancellation option of recording or video recording, and if the recording or video recording is not agreed, there is a temporary start option of recording or video recording. The module provides a series of advanced communication management functions, effectively enhancing the flexibility and security of communication. First, the module can store call log files in a cloud server or at least one electronic device, which not only ensures the security and durability of the data, but also facilitates future retrieval and management. In terms of SMS communications, the module can authorize SMS messages and display the customer's phone number, code or name, ensuring transparency in the communication process. For call management, the module supports automatic settings for traditional phones and smartphones, and only answers calls from set phone numbers and calls with an recognition code and consent to recording. This can effectively prevent spam calls and improve communication security. When a call comes in, the module can also display whether the caller has the recognition code and whether they agree to recording or video recording, and provide flexible options, such as temporarily canceling or starting the recording or video recording function, further enhancing the customer's control over the call process. These functions together ensure the compliance, privacy and security of communications, and achieve comprehensive management and protection of the communication process.

In summary, the electronic information recognition system and method provided by the present invention not only overcomes the existing technical obstacles described in the prior art, but also optimizes the information recognition process by connecting multiple units of different information sources through a modular platform. The system can adjust the scale and functionality of the platform according to user needs, improving the flexibility and scalability of the system. The present invention also proposes an innovative identity recognition and data processing mechanism that can be seamlessly integrated into existing information management systems without requiring large-scale modifications to existing systems. The system uses big data comparison and calculation to analyze the credibility and/or authenticity of information and/or digital traces, thereby achieving the function of dynamically updating and approving customer identity. This design omits the traditional cumbersome identity verification steps and significantly improves the efficiency and security of the system.

Various embodiments of the present invention have been described above in detail. However, a person skilled in the art to which the present invention pertains may make various modifications to the above-described embodiments without departing from the scope of the present invention. Thus, the scope of the present invention should not be limited to the described embodiments, but should be defined by the following claims and their equivalents.

## Claims

1. An electronic information recognition system comprising:
At least one electronic device bound to each other is connected to a platform of a server host, wherein any one of the electronic devices uses features from the body to capture at least one first feature from the body when a customer wants to log in to the platform , and writes back a variable key code through the network in conjunction with an approved server or a third party to recognize the customer's identity, thereby determining whether the customer can log in to the platform, and the variable key code can be automatically updated or passively updated; after logging in to the platform, a second feature from the body is selectively captured at regular intervals to maintain the login, and the first feature is the same as or different from the second feature, wherein the platform includes at least one module connected to each other to interactively process the information of customers on the network: a recording module, which can record and provide any customer's information and/or digital trace after completing the login; and a verification module, which is connected to at least one government agency, identification organization and/or third party to interactively verify the customer's information and/or the digital trace and give the customer whose verification result is passed an recognition code and/or notarization.

2. An electronic information recognition system as described in claim 1, wherein the at least one module further comprises: a disclosure module for obtaining the information of any customer through a smart contract signed between customers; an authorization module for customers to confirm whether the information has been authorized for use by the relevant customers; an identification module for analyzing the credibility and/or authenticity of the information and/or the digital trace by collecting big data comparison and calculation, the identification module can analyze the URL, website or image based on the input URL, website or image through the Internet search engine and the platform's network server database to deconstruct multiple key indicator data and/or comments of the information, and the verification module notifies the at least one government agency, identification organization, third party and /or the customer if the verification result is not passed .

3. An electronic information recognition system as described in Claim 2, wherein the at least one module further comprises: a tracking push module, through which the client can push the information to its tracker; and a telecommunications verification module, which can support the interconnection between traditional telephone lines and the Internet, and can present the recognition code when the caller ID is displayed, providing the client with the option of answering all calls, answering calls only with the recognition code, or answering calls only with the recognition code and consent to call recording .

4. An electronic information recognition system as described in claim 3, wherein the telecommunications verification module can provide the caller with a setting in advance to not agree to video or audio recording, in which case the record file will be automatically deleted after the call, and during the call, a specific key of the electronic device can be touched to record video or audio and store the record file, but the record file will be restricted from being read and analyzed, reminded, sorted and text-output by the recognition module, unless the other party agrees or the restriction is lifted in accordance with the law during a judicial investigation; the telecommunications verification module can also provide the caller with a setting in advance to agree to video or audio recording, in which case the record file will be automatically stored after the call, and the record file can be read and analyzed, reminded, sorted and text-output by the recognition module.

5. An electronic information recognition system as described in Claim 3, wherein the log file can be stored in a cloud server or at least one of the electronic devices; when communicating via SMS, the telecommunications verification module can combine the verification module and the identification module to approve the SMS and display the customer's phone number or code or name; the digital trace includes various information recognitions, inquiries, exchanges, prosecutions and reports, contract signings, transaction behaviors, personal information disclosure and telecommunications behavior settings, audio or video recordings and storage, and file copying, modification and movement, and the information includes: comments, portraits, endorsements, brand ownership, etc., and people, things, time, place, and objects related to the customer .

6. An electronic information recognition system as described in claim 3, wherein the telecommunications verification module can display whether the recognition code is present, whether the user agrees to record or videotape when a call comes in, and if the user agrees to record or videotape, the user can choose to temporarily cancel the recording or videotape, and if the user disagrees to record or videotape, the user can choose to temporarily start the recording or videotape; and provide a traditional telephone or smart phone with automatic settings to only answer calls from the set phone number and calls from the user who has the recognition code and agrees to record the call .

7. An electronic information recognition method, comprising: selecting features from the body, capturing at least one first feature from the body when the customer logs in, and selectively capturing a second feature from the body at regular intervals after the login, wherein the first feature is the same as or different from the second feature; and combining a variable key code writeback to recognize the customer's identity, thereby determining whether the customer can log in to the platform, and the variable key code can be automatically updated or passively updated; wherein the platform includes at least one module connected to each other to interactively process customer information on the network: after completing the login, record and provide any customer's information and/or digital trace; connect to at least one government agency, identification organization and/or third party to interactively verify the customer's information and/or digital trace and assign a recognition code and/or notarization to the customer whose verification result is passed .

8. The electronic information recognition method as described in claim 7, wherein the at least one module further performs operations including: obtaining the information of any customer through a smart contract; allowing the customer to confirm whether the information is authorized for use by the relevant customer; the customer can push the information to its tracker; supporting the interconnection between traditional telephone lines and the Internet, and presenting the recognition code when the caller ID is displayed, providing the customer with the option of answering all calls, answering calls only with the recognition code, or answering calls only with the recognition code and consent to call recording; collecting big data for comparison and calculation to analyze the credibility and/or authenticity of the information and/or the digital track; according to the input network URL, website or picture, through the collaboration of the Internet search engine and the network server database of the platform, the URL, website or picture is analyzed to deconstruct multiple key indicator data and/or comments of the information. The digital track includes the information recognition, inquiry, communication, prosecution and reporting, signing of contracts, transaction behavior, personal information disclosure and telecommunication behavior setting, recording or video recording and storage, copying, changing and moving of files, the information includes: comments, portraits, endorsements, brands, etc., which are related to the customer, things, time, place and objects; if the verification result is not passed, the at least one government agency, identification organization and /or third party and the customer will be notified .

9. An electronic information recognition method as described in claim 7, wherein the at least one module further performs operations including: providing the caller with a setting in advance to not consent to video or audio recording, in which case the record file is automatically deleted after the call, and during a call, a specific key of the electronic device is touched to record video or audio and store the record file, but the record file is restricted from being read and analyzed, reminded, organized, and output as text, unless the other party agrees or the restriction is lifted in accordance with the law during a judicial investigation; and providing the caller with a setting in advance to consent to video or audio recording, in which case the record file is automatically stored after the call, and the record file can be read and analyzed, reminded, organized, and output as text.

10. An electronic information recognition method as described in claim 7, wherein the at least one module further performs operations including: storing the log file in a cloud server or at least one electronic device; when communicating via SMS, the SMS can be approved and the customer's phone number, code or name can be displayed; traditional phones or smart phones can be automatically set to only answer calls from the set phone number and those with the recognition code and the other party agrees to record the call; when a call comes in, it can display whether the recognition code is present, whether recording or video recording is agreed, and if recording or video recording is agreed, there is an option to temporarily cancel the recording or video recording, and if recording or video recording is not agreed, there is an option to temporarily start the recording or video recording.
